Europäisches Patentamt

European Patent Office

Office européen des brevets

(11) Publication number: **0 290 059 B1**

# EUROPEAN PATENT SPECIFICATION

(45) Date of publication of patent specification: **13.05.92**   (51) Int. Cl.⁵: **A01D  78/00**, A01D  78/08, A01D  78/14

(21) Application number: **88200409.6**

(22) Date of filing: **07.03.88**

---

(54) **An implement for displacing crop.**

---

(30) Priority: **09.03.87 NL 8700556**
   **18.02.88 NL 8800409**

(43) Date of publication of application:
   **09.11.88 Bulletin  88/45**

(45) Publication of the grant of the patent:
   **13.05.92 Bulletin  92/20**

(84) Designated Contracting States:
   **DE FR GB NL**

(56) References cited:
   **DE-A- 1 803 149**
   **DE-A- 2 628 598**
   **FR-A- 2 305 328**
   **GB-A- 2 173 383**

(73) Proprietor: **C. van der Lely N.V.**
   **Weverskade 10 P.O. Box 26**
   **NL-3155 ZG Maasland(NL)**

(72) Inventor: **Van de Lely, Cornelis**
   **7, Brüschenrain**
   **Zug(CH)**

(74) Representative: **Mulder, Herman et al**
   **Octrooibureau Van der Lely N.V. Weverskade**
   **10 P.O. Box 26**
   **NL-3155 ZG Maasland(NL)**

Rank Xerox (UK) Business Services
(3.08/2.19/2.0)

## Description

The invention relates to an implement for displacing crop from two sides towards each other, which implement comprises a frame and connected therewith two power-driven rake members which are rotatable about upwardly directed rotary shafts and drivable in opposite directions of rotation and non-power-driven rake members, cooperating with the power-driven rake members.

Such an implement is known from GB-A-2 173 383; the power-driven rake members described in this publication are relatively adjustable in a direction of height to mitigate problems presented by ground unevennesses. The known implement has no possibility to vary the working width, while the measurements to bring the implement in the transport position are complicated and expensive.

The invention has for its object to realize an implement as described above wherein variation of the working width and conversion of the implement into a transport position can be obtained at an efficient way without diminishing the quality of the swath to be formed.

According to the invention, the implement is characterized in that the power-driven rake members are attached to arms that are pivotable about a central portion of the frame, whereby the distance of the non-power-driven rake members to the symmetric plane of the frame is automatically changed when the angle between the arms is changed, while maintaining the orientation of the non-power-driven rake members relative to the direction of operative travel. Specifically the angle between the arms can be set by means of a hydraulic cylinder located parallel to a connecting line between the rotary shafts of the power-driven rake members, whereby the rotary shafts of the non-power-driven rake members assume a fixed position relative to the hydraulic cylinder. With such an implement the working width of the implement can be varied, while as a first step to bring the implement into the transport position the interspace between the power-driven rake members can be diminished, whereafter the transport position is reached by folding the non-power-driven rake members above the power-driven rake members.

A cooperation of power-driven rake members and non-power-driven rake members is known per se from FR-A-2 305 928; however, the implement in this publication comprises power-driven rake members which are rotatable about a horizontal rotary shaft, while the crop is displaced by non-power-driven rake members only from one side. Furthermore there is no possibility to vary the working width, specifically the transport position is reached by only folding the non-power-driven rake members above the power-driven rake members.

For a better understanding of the invention and to show how the same may be carried into effect, reference will now be made, by way of example, to the accompanying drawings, in which:

Figure 1 is a plan view of an implement according to the invention in a working position, and

Figure 2 is a plan view of this implement in a transport position.

The implement according to the invention is mirror-inverted with respect to a vertical symmetry plane 85 which is located in the direction of operative travel A and coincides with the longitudinal symmetry plane of a tractor 2 hauling the implement. The following description generally relates to one of the mirror-inverted halves, but also holds for the other half, unless stated otherwise.

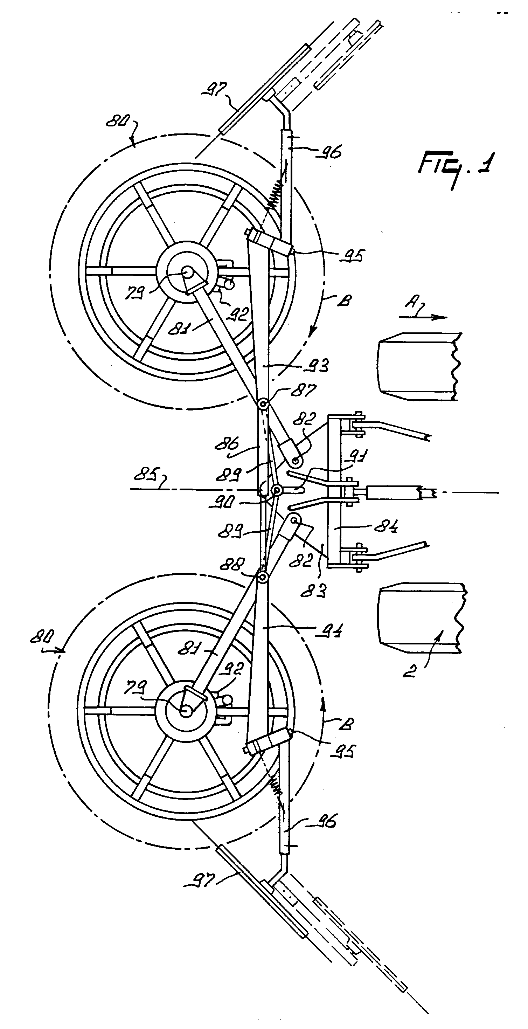

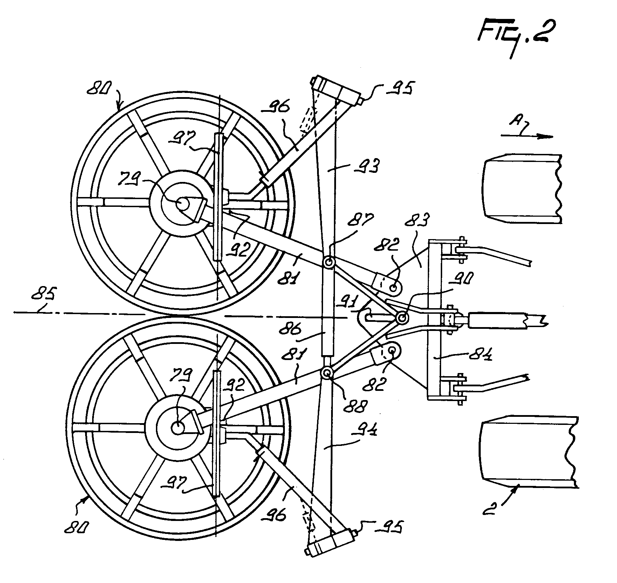

The machine according to Figures 1 and 2 relates to an implement for displacing crop from two sides towards each other, which implement comprises a frame, a plurality of rake wheels and a tedder member.

The tedder member of the machine comprises two rake members 80 which, in a known per se manner (not shown), are drivable from the power take-off shaft of the tractor 2 about obliquely upwardly and forwardly directed rotary shafts. Then, the upwardly directed rotary shafts 79 of the rake members 80 have a direction which encloses an angle with a direction perpendicular to the soil, which angle approximately is in the range between 10 and 20°. Each of the rake members 80 is supported in the rear end of the arm 81 associated with the frame of the machine. The front ends of the arms 81 are supported pivotably about upwardly directed shafts 82 in a central portion 83 of the frame of the machine. The central portion 83 is provided with a three-point trestle 84 comprising the usual three coupling points, by means of which the portion 83, and hence the entire machine, is connectable to the lifting hitch of the tractor 2.

The parts 80 to 84 are arranged always symmetrically relative to a vertical symmetry plane 85 which approximately may coincide witht the vertical symmetry plane of the tractor 2. The shafts 82 are located correspondingly and equally spaced at either side of the symmetry plane 85, and each of the, taken in the rearward direction, mutually diverging arms 81 encloses, seen in plan view, approximately an identical angle with the plane 85.

During movement of the machine across the field while displacing crop, it is possible for the space between the rake members 80 to be changed. To that end there is provided a horizontal hydraulic cylinder 86, the centre line of which, seen in plan view, always extends approximately perpendicularly to the symmetry plane 85. The end of the cylinder facing away from the piston rod is attached pivotably on a pivot shaft 87 extending parallel to the shafts 82 to the nearby arms 81, while the end of the piston rod of the hydraulic cylinder 86 is attached pivotably to the other arm 81 about a pivot shaft 88 also extending parallel to the shafts 82. The hydraulic cylinder 86 is designed as a double-acting one, is connected to the hydraulic system of the tractor 2 and, as was stated in the foregoing, is operable by the tractor driver from his seat.

In order to be able to perform, during operation, changes in the interspace between the rake members 80 in a symmetrical manner relative to the symmetry plane 85, there are arranged, likewise in a symmetrical manner relative to the plane 85, two control rods 89, the outer ends of which are attached pivotably about the pivot shafts 87 and 88, respectively. The two facing ends of the control rods 89 are attached pivotably about a pin 90 extending parallel to the shafts 82, which pin 90 is arranged slidably in a known per se manner in a horizontally extending slotted aperture 91, the centre line of which is located in the symmetry plane 85. In the arrangement as shown in Figure 1 wherein the rake members 80 are most widely interspaced, the pin 90 abuts the rear end of the slotted aperture 91, which end constitutes a stop for this interspace between the rake members 80. Figure 2 shows an arrangement of the rake members 80 wherein they are closest and almost contact each other; in this position, the stop is constituted by the front boundary of the slotted aperture 91.

During operation and, if desired, also during transportation, the rake members 80 are supported on the soil by ground wheels 92 which, preferably, are adjustable in height. Since, during operation, the rake members 80 serve as tedder members, the ground wheels 92 have their lowest position relative to the associated rake members. Because of the fact that the space between the rake members 80 can be adjusted, the ground wheels are freely pivotable about vertical shafts or resiliently and/or in a damped fashion pivotable thereabout.

The rake members 80 are provided with approximately horizontally outwardly and slightly downwardly extending tines (not shown), which are arranged in groups. Each group of tines is pivotable about pivot shafts arranged tangentially relative to the circumference of the tine carrier body and, when the rake members are driven during operation, is maintained in this outwardly directed working position by centrifugal forces. When the rake members are not driven, the groups of tines can be folded about the associated tangentially directed pivot shafts into a position wherein the tines extend approximately parallel to the rotary shafts 79; this position of the tines is set for transportation purposes (Figure 2), so that in a transport position the total width of the two rake members is determined approximately by the sum of the diameters of the carrier bodies.

With respect to the geometry of the provisions made for setting the interspace between the rake members 80 it is observed that the two arms 81 are equal in length, and that the distance between each of the shafts 82 and the associated pivot shafts 87 and 88, respectively, is the same for both arms. Therefore, seen in plan view, the centre line of the hydraulic cylinder 86 is directed parallel to a connecting line between the two rotary shafts of the rake members 80. In case the length of the hydraulic cylinder 86 is changed from the driver's seat, the said parallelism is maintained.

To the cylinder itself of the hydraulic cylinder 86 there is arranged in a rigid manner an extension in the form of a carrier 93, which from the pivot shaft 87 extends in outward direction and in the working position may be located above the nearby rake member 80. The centre line of the carrier 93 is approximately in alignment with that of the cylinder of the hydraulic cylinder 86. In an analogous manner there is arranged in the extension of the piston rod of the hydraulic cylinder 86 a carrier 94, which from the pivot shaft 88 extends in outwards direction. Likewise, the carrier 94 is attached rigidly relative to the piston rod of the hydraulic cylinder 86. The ends of the carriers 93 and 94 are located near, but outside, the vertical planes which extend into the direction of operative travel A and parallel to the symmetry plane 85 and contain a respective rotary shaft 79.

To the outermost ends of the carriers 93 and 94 there are provided approximately horizontal pivot shafts 95 which, taken in the direction of operative travel A, converge in the forward direction and whose centre lines, seen in plan view, intersect each other in the symmetry plane 85. About each of the pivot shafts 95 there is arranged pivotably a tubular support 96, which in the working position shown in Figure 1 extends in the outward direction; the centre lines of the supports 96 are directed approximately perpendicularly to the symmetry plane 85. To the outer end of each of the supports 96 there is mounted in an outwardly adjustable manner a freely rotatable, ground-driven rake wheel 97. Seen in plan view, the plane of each approximately vertically arranged rake wheel 97 encloses an angle of approximately 30 - 60° with the direction of operative travel A. Said rake wheel planes diverge relative to the direction of operative travel A in the forward direction.

Each of the two ground-driven rake wheels 97 serves as a side delivery rake with respect to the nearby rake member 80. Consequently, the bottom tines on each rake wheel 97 are arranged such that the crop displaced thereby can be picked up directly by the tines of the nearby rake member 80. If so desired, there may be arranged, taken relative to the direction of operative travel A, in front of each of the rake wheels 97 yet at least a second ground-driven rake wheel (as indicated by dash lines), which feeds the crop displaced thereby to the rake wheel 97 shown in full lines. In case the implement shown in Figure 1 should be brought into the transport position, then the length of the hydraulic cylinder 86 is reduced from the driver's seat until the pin 90 reaches the front end of the slotted aperture 91. In this position, wherein the groups of tines of the rake members 80 are folded upwardly approximately in the vertical direction, the carrier bodies thereof almost contact each other or actually do so (Figure 2). In this transport position, the rake wheels 97 are pivoted inwardly about the, in plan view, obliquely arranged pivot shafts 95 into the position as indicated in Figure 2. In this position, the rake wheels 97 and the further rake wheels, if any, attached to the supports 96 rest on the top side of the nearby rake member 80 and no longer extend therebeyond.

During operation, the rake members 80 are driven in a known per se manner (not shown for the sake of clarity) in opposite directions of rotation B (Figure 1), while the rake wheels 97 and the further rake wheels, if any, are pivoted outwardly into the position as shown in the said Figure 1. Since ground-driven rake wheels are excellently suitable for laterally displacing crop (even at high working speeds), the construction shown in Figure 1 affords in a simple manner a considerable increase in the machine's working width by using a construction which is more simple and cheaper than in the case when further rake members 80 would have been added. In addition, there is the advantage that the rake wheels 97 can be pivoted in a simple manner into a transport position, in which position they do not contribute to the width of the entire machine in said position. In case further rake members 80 would have been added on either side of the symmetry plane 85 in order to increase the working width, the obtainment of a small transport width would have involved considerably more constructional complications.

During operations, the implement shown in Figure 1 is moved into the direction of operative travel A at a comparatively high speed. In a known per se manner, the rake wheels 97 displace the crop lying on the soil into the direction of the rake members 80, which carry same along into the direction B and spread it through between the two rake members 80 towards the rear. Then, the rake members 80 are arranged at a comparatively large inclination and act as tedder members.

The distance between the rake members 80 and between the rake wheels 97 as shown in Figure 1 corresponds to the largest working width of the implement according to the invention. During operation, it is possible for the driver to reduce at wish the distance between the rake members 80 from his seat by decreasing the length of the hydraulic cylinder 86. The rake members 80 remain arranged symmetrically relative to the plane 85 due to the control device comprising the two equally long control rods 89, the inner ends of which are passed through the slotted aperture 91 located in the symmetry plane 85. Now, when the distance between the rake members 80 is decreased or increased, the position of the rake wheels 97 relative to the nearby rake members remains the same, because each carrier maintains its position relative to the centre line of the hydraulic cylinder 86 and hence also its position relative to the connecting line between the rotary shafts of the rake members 80. Therefore, once a position between the rake wheels 97 and the nearby rake members 80 has been set, it need not be reset when the distance between the rake members 80 is changed during operation. The same also holds for the distance between the lowermost tines of each of the rake wheels 97 and the path of the tines of the nearby rake member 80; this distance also remains automatically constant upon a change of the working width.

In the above manner, by means of the implement shown in Figures 1 and 2 it is possible in a constructionally simple manner to achieve a maximum working width of approximately more than six metres.

During transportation, the implement according to either of the two embodiments may be in the lifted position by means of the three-point lifting hitch of the tractor, but it may alternatively be transported while being supported by the height-adjustable ground wheels.

The measure of increasing the working width of rake members in a constructionally simple manner by means of additional ground-driven rake wheels (which do not require a separate power-drive and, with a view to the adjustment into a transport position, have a comparatively low weight) is not dependent on the nature of the tedder members as shown in the drawings. In principle, the measure of increasing the working width in a simple manner is also independent of the automatic symmetrical adjustment of the working width of the rake members 80; it is possible, for example, to adjust the distance between said rake members also by hand while maintaining the thereby also occurring fixed relative position between the rake members 80 and the nearby ground-driven rake wheels 97 upon a change of the working width (the hydraulic cylinder 86 is replaced by a telescopic rod).

In principle, the inventive idea is not limited to the displacement of crop from two sides towards each other by means of ground-driven rake wheels to tedder members which are drivable about upwardly directed rotary shafts, but it may also be employed for the displacement of crop from two sides towards each other to swath-forming members. The rake members 80 and their position may be adapted and be driven at a comparatively low rotational speed and/or be provided with swath boards which are attached to the carriers 93, 94.

The invention is not limited to the features stated in the description and/or in the claims but also relates to all the details of the drawings, whether they have been described or not.

## Claims

1. An implement for displacing crop from two sides towards each other, which implement comprises a frame (81, 83) and connected therewith two power-driven rake members (80) which are rotatable about upwardly directed rotary shafts and drivable in opposite directions of rotation and non-power-driven rake members (97), cooperating with the power-driven rake members (80), characterized in that the power-driven rake members (80) are attached to arms (81) that are pivotable about a central portion (83) of the frame (81, 83) whereby the distance of the non-power-driven rake members (97) to the symmetric plane (85) of the frame (81, 83) is automatically changed when the angle between the arms (81) is changed, while maintaining the orientation of the non-power-driven rake members (97) relative to the direction of operative travel.

2. An implement as claimed in claim 1, characterized in that the angle between the arms (81) can be set by means of a hydraulic cylinder (86) located parallel to a connecting line between the rotary shafts of the power-driven rake members (80), and the rotary shafts of the non-power-driven rake members (97) assume a fixed position relative to the hydraulic cylinder (86).

3. An implement as claimed in claim 1 or 2, characterized in that the distance between the power-driven rake members (80) can be set at choice from the driver's seat of the tractor hauling the implement during operation.

4. An implement as claimed in any one of the preceding claims, characterized in that the non-power-driven rake members (97) are formed by ground-driven rake wheels added to the power-driven rake members (80), said rake wheels being mutually diverging.

5. An implement as claimed in claim 4, characterized in that the rake wheels (97) are arranged in groups and each group is designed as a side delivery rake.

6. An implement as claimed in claim 4 or S, characterized in that the rake wheels (97) displace the crop to near the respective power-driven rake members (80).

## Revendications

1. Machine pour déplacer une récolte à partir de deux côtés, de l'un vers l'autre, ladite machine comprenant un châssis (81, 83) et, reliés à celui-ci, deux organes de ratissage (80) motorisés, tournant autour d'arbres de rotation dirigés vers le haut et entraînés dans des sens de rotation opposés, et des organes de ratissage (97) non motorisés, coopérant avec les organes de ratissage (80) motorisés,
**caractérisée** en ce que les organes de ratissage (80) motorisés sont attachés à des bras (81) qui sont pivotants autour d'une partie centrale (83) du châssis (81, 83), ce qui fait que la distance entre les organes de ratissage (97) non motorisés et le plan de symétrie (85) du châssis (81, 83) est automatiquement changée quand l'angle entre les bras (81) est changé, tout en maintenant l'orientation des organes de ratissage (97) non motorisés par rapport au sens de marche du travail.

2. Machine selon la revendication 1, caractérisée en ce que l'angle entre les bras (81) peut être déterminé au moyen d'un vérin hydraulique (86) situé parallèlement à une ligne joignant les arbres de rotation des organes de ratissage (80) motorisés, et les arbres de rotation des organes de ratissage (97) non motorisés prennent une position fixe par rapport au vérin hydraulique (86).

3. Machine selon la revendication 1 ou 2, caractérisée en ce que la distance entre les organes de ratissage (80) motorisés peut se régler à volonté depuis le siège du conducteur du tracteur remorquant la machine pendant le travail.

4. Machine selon l'une quelconque des revendications précédentes, caractérisée en ce que les organes de ratissage (97) non motorisés sont constitués par des roues de ratissage entraînées par le sol, s'ajoutant aux organes de ratissage (80) motorisés, lesdites roues de ratissage étant divergentes entre elles.

5. Machine selon la revendication 4, caractérisée en ce que les roues de ratissage (97) sont disposées en groupes, et chaque groupe est conçu comme un râteau à décharge latérale.

6. Machine selon la revendication 4 ou 5, caractérisée en ce que les roues de ratissage (97) déplacent la récolte jusqu'à proximité des organes de ratissage (80) motorisés respectifs.

**Patentansprüche**

1. Gerät zum Verlagern von Erntegut von zwei Seiten aus in Richtung zueinander, mit einem Rahmen (81, 83) und zwei mit ihm verbundenen, zwangläufig angetriebenen Rechgliedern (80), die um aufwärts gerichtete Wellen drehbar und gegensinnig angetrieben sind, sowie mit nicht zwangläufig angetriebenen Rechgliedern (97), die mit den zwangläufig angetriebenen Rechgliedern (80) zusammenarbeiten, dadurch gekennzeichnet, daß die zwangläufig angetriebenen Rechglieder (80) an Armen (81) angebracht sind, die um einen zentralen Teil (83) des Rahmens (81, 83) schwenkbar sind, wobei der Abstand der nicht zwangläufig angetriebenen Rechglieder (97) zur Symmetrieebene (85) des Rahmens (81, 83) bei Veränderung des Winkels zwischen den Armen (81) selbsttätig geändert wird, während die Orientierung der nicht zwangläufig angetriebenen Rechglieder (97) zur Arbeitsrichtung unverändert bleibt.

2. Gerät nach Anspruch 1, dadurch gekennzeichnet, daß der Winkel zwischen den Armen (81) mittels eines hydraulischen Zylinders (86) einstellbar ist, der parallel zu einer Verbindungsgeraden zwischen den Wellen der angetriebenen Rechglieder (80) angeordnet ist, und daß die Drehachsen der nicht angetriebenen Rechglieder (97) eine feste Lage zu dem hydraulischen Zylinder haben.

3. Gerät nach Anspruch 1 oder 2, dadurch gekennzeichnet, daß der Abstand zwischen den angetriebenen Rechgliedern (80) nach Wahl vom Fahrersitz des Schleppers aus einstellbar ist, der das Gerät im Betrieb zieht.

4. Gerät nach einem der vorhergehenden Ansprüche, dadurch gekennzeichnet, daß die nicht zwangläufig angetriebenen Rechglieder (97) bodengetriebene Rechräder sind, die den zwangläufig angetriebenen Rechgliedern (80) zugeordnet und zueinander divergierend angeordnet sind.

5. Gerät nach Anspruch 4, dadurch gekennzeichnet, daß die Rechräder (97) gruppenweise angeordnet sind und jede Gruppe als Seitenrechen ausgebildet ist.

6. Gerät nach Anspruch 4 oder 5, dadurch gekennzeichnet, daß die Rechräder (97) das Erntegut bis nahe an die jeweiligen zwangläufig angetriebenen Rechglieder (80) verlagern.

FIG. 1

FIG.2